# EUROPÄISCHE PATENTANMELDUNG

(11) **EP 1 832 783 A1**
(43) Veröffentlichungstag der Anmeldung: **12.09.2007**
(21) Anmeldenummer: 07004328.6
(22) Anmeldetag: 02.03.2007
(51) Int. Cl.: F16H 59/70, G01B 7/14

(54) **Sensoranordnung und Schaltanordnung**

(30) Priorität: 02.03.2006 DE 102006011207
(71) Anmelder: GETRAG Getriebe- und Zahnradfabrik Hermann Hagenmeyer GmbH & Cie KG, 74199 Untergruppenbach (DE)
(72) Erfinder: Blessing, Uli Christian, 74078 Heilbronn (DE); Hauser, Andreas, 78564 Wehingen (DE)
(74) Vertreter: Steil, Christian

(57) **Zusammenfassung**

Es wird vorgeschlagen eine Sensoranordnung (37) zum Erfassen von wenigstens einer Position (S1, M, S2) eines beweglich gelagerten Elementes (32) in einer Erfassungsrichtung (35), wobei die Sensoranordnung (37) eine Magnetanordnung (38; 40), die in der Erfassungsrichtung (35) eine Magnetfeldverteilung besitzt, und einen Magnetfeldsensor (50) aufweist, und wobei die Magnetanordnung (38; 40) und der Magnetfeldsensor (50) so angeordnet sind, dass der Magnetfeldsensor (50) in unterschiedlichen Positionen (S1, M, S2) des beweglichen Elementes (32) in Erfassungsrichtung (35) unterschiedliche Magnetfeldstärken (H) erfasst.

Dabei weist die Magnetanordnung (38; 40) wenigstens zwei Magnete (42, 44; 46, 48) auf, deren Magnetfeldverteilungen so miteinander kombiniert sind, dass sich zumindest über einen Abschnitt (62; 64) in Erfassungsrichtung (35) eine annähernd lineare Kennlinie (60) der Sensoranordnung (37) ergibt.

## Beschreibung

Die vorliegende Erfindung betrifft eine Sensoranordnung zur Erfassung wenigstens einer Position eines beweglich gelagerten Elementes in einer Erfassungsrichtung, wobei die Sensoranordnung eine Magnetanordnung, die in der Erfassungsrichtung eine Magnetfeldverteilung besitzt, und einen Magnetfeldsensor aufweist, und wobei die Magnetanordnung und der Magnetfeldsensor so angeordnet sind, dass der Magnetfeldsensor in unterschiedlichen Positionen des beweglichen Elementes in Erfassungsrichtungsrichtung unterschiedliche Magnetfeldstärken erfasst.

Die Erfindung betrifft ferner eine Schaltanordnung zum Schalten von Gangstufen eines Stufengetriebes, insbesondere für Kraftfahrzeuge, mit wenigstens einem Schaltelement, das an einem Gehäuse in einer axialen Richtung verschieblich gelagert ist und beim Schalten in der axialen Richtung versetzt wird, und mit einer Sensoranordnung zum Erfassen wenigstens einer axialen Position des Schaltelements.

Eine derartige Schaltanordnung ist aus dem Dokument EP 1507 100 A2 bekannt.

In Schaltanordnungen zum Schalten von Gangstufen eines Stufengetriebes ist es insbesondere dann, wenn das Stufengetriebe automatisiert ausgeführt ist, von Bedeutung, dass die axiale Position von Schaltelementen wie Schaltstangen axial erfasst wird. Durch eine derartige Erfassung kann die übergeordnete Steuerung dann feststellen, ob sich das Schaltelement bspw. in einer Neutralposition befindet oder in einer geschalteten Position.

Ferner kann eine Sensoranordnung auch dazu verwendet werden, die axiale Position und ggf. die axiale Bewegung des Schaltelementes zu regeln und/oder zu steuern. Hierbei kann die Sensoranordnung zur Bereitstellung eines Istwertes in einer geschlossenen Regelschleife verwendet werden. Auch eine Anwendung auf Lage-Steuerungen ist möglich.

Aus dem genannten Dokument EP 1 507 100 A2 ist es bekannt, an einer Schaltgabel einen Fortsatz anzuformen, in dem ein Magnet angeordnet ist. Ein gehäusefester Sensor dient zur Erfassung der Lageposition.

Aus dem Dokument DE 42 08 888 A1 ist es bekannt, an einem Ende einer Schaltstange einen Magneten festzulegen. Am Gehäuse sind in zwei axial versetzten Positionen Hall-Sensoren angeordnet. Diese sprechen in vorbestimmten Positionen der Schaltstange auf deren Dauermagnet an.

Eine ähnliche Anordnung ist aus dem Dokument DE 199 61 087 A1 bekannt. In diesem Dokument ist auch eine alternative Anordnung gezeigt, bei der an dem Gehäuse ein Abstandssensor für lineare veränderliche Abstände (LVDT) vorgesehen ist.

Aus dem Dokument DE 377 13 880 A1 ist eine Magnetschranke mit einem gehäusefesten Sensor und einem gehäusefesten Magneten bekannt, zwischen denen eine Schaltstange hindurchbewegt werden kann.

Das Dokument EP 1 544 511 A2 offenbart eine Vorrichtung zum manuellen Schalten eines Automatikgetriebes mit einer komplexen Sensoranordnung, bei der eine dreispurige Magnetanordnung mit mehrfachen Nord- und Südpolen und eine hierzu quer- und längsversetzte Anordnung aus wenigstens vier Hall-Sensoren vorgesehen sind. Dies soll ermöglichen, dass eine von der Mittelstellung abweichende erste oder zweite Schaltstellung zumindest zweifach erfassbar sind, um eine gewisse Redundanz der Erfassung zu bieten.

Es ist ferner bekannt, an einer Schaltstange zwei Permanentmagnete festzulegen, und zwar in entgegengesetzter Polung und mit einem gewissen axialen Abstand voneinander. An dem Gehäuse ist ein Magnetfeldsensor vorgesehen. Die von den beiden Magneten erzeugten Magnetfelder schließen in axialer Richtung einander an. In der Mitte zwischen den zwei Magneten ist die von dem Magnetfeldsensor erfasste Feldstärke Null. Aufgrund der Glockencharakteristik der Kennlinien ist der Gradient der sich ergebenden Magnetfeldverteilung in diesem mittleren Bereich relativ niedrig, in anderen Bereichen hingegen relativ hoch.

Aus dem Dokument DE 197 48 115 A1 ist eine Vorrichtung zum elektromechanischen Schalten eines Gangwechselgetriebes mittels eines Schaltgliedes bekannt, wobei mindestens zwei Magnete über den Umfang des Schaltgliedes verteilt angeordnet sind und wobei eine Mehrzahl von Hall-Sensoren in axialer Richtung beabstandet voneinander parallel zur Erstreckung des Schaltgliedes angeordnet sind. Durch diese Anordnung soll es möglich sein, sowohl die Schalt- als auch die Wählpositionen des als Schaltwelle ausgebildeten Schaltgliedes zu erfassen.

Aus dem Dokument US 2004/0239313 A1 ist ein Positionssensor bekannt, der einen linearen Hall-Sensor aufweist. An einer Oberfläche einer weichmagnetischen Platte sind ein erster Magnet mit der Polarität N und ein zweiter Magnet mit der Polarität S in einer Erfassungsrichtung versetzt zueinander angeordnet. Die Magnete weisen jeweils Stirnseiten auf, die zu einem Hall-Sensor weisen. Die Stirnseiten sind jeweils als schräge, ebene Flächen ausgebildet, die einen Winkel von etwa 30° zur Erfassungsrichtung einnehmen. Die weichmagnetische Platte dient als Rückführpfad. Die Magnete sind von dem Hall-Sensor mit einem Abstand von 0,28 mm beabstandet. Die Magnete sind 1,8 mm in Erfassungsrichtung voneinander beabstandet.

Es ist vor dem Hintergrund des oben genannten Standes der Technik eine Aufgabe der Erfindung, eine Schaltanordnung mit einer kostengünstigen Sensoranordnung zu schaffen, wobei die Steuerung insgesamt vereinfacht werden soll.

Diese Aufgabe wird bei der eingangs genannten Sensoranordnung dadurch gelöst, dass die Magnetanordnung wenigstens zwei Magnete aufweist, deren Magnetfeldverteilungen so miteinander kombiniert sind, dass sich zumindest über einen Abschnitt in Erfassungsrichtung eine annähernd lineare Kennlinie der Sensoranordnung ergibt.

Zum einen ist es mit der erfindungsgemäßen Sensoranordnung möglich, unterschiedliche axiale Positionen mit nur einem Magnetfeldsensor, z.B. einem Hall-Sensor zu erfassen. Das Bereitstellen von aufwändigen LVDT-Sensoren ist nicht erforderlich.

Die beim Zusammenspiel eines Magneten und eines Magnetfeldsensors generell nichtlineare Kennlinie (bspw. eine Glockenformkennlinie) kann durch die Kombination der Magnetfelder von zwei Magneten so kombiniert werden, dass sich aus der Sicht des Magnetfeldsensors eine annähernd lineare Kennlinie ergibt. Mit anderen Worten ergibt sich eine annähernd lineare Kennlinie, die unter Berücksichtigung der Messtoleranzen des Magnetfeldsensors lineare Ausgangswerte für eine anschließende Steuereinrichtung (Steuerungs-/Regelungselektronik) erzeugt.

Hierdurch kann der Steuerungsaufwand in einer übergeordneten Steuerung erheblich verringert werden. Denn die Nutzung einer linearen Kennlinie ermöglicht das Verwenden von linearen Gleichungen in der Steuerung. Es ist nicht notwendig, eine nichtlineare Kennlinie einzulernen und/oder abzuspeichern.

Die Aufgabe wird somit vollkommen gelöst.

Von besonderem Vorzug ist es, wenn die wenigstens zwei Magnete unterschiedlich starke Magnetfelder erzeugen.

Durch diese Maßnahme lässt sich eine Linearisierung der Kennlinie besonders einfach erreichen.

Von weiterem Vorteil ist es, wenn die wenigstens zwei Magnete in radialer Richtung magnetisiert sind.

Bei dieser Ausführungsform lässt sich das Magnetfeld in optimaler Weise erfassen.

Von besonderem Vorteil ist es, wenn die wenigstens zwei Magnete parallel zueinander angeordnet und gleich gepolt sind.

Bei dieser Ausführungsform lässt sich eine Linearisierung der Kennlinie der Sensoranordnung effizient erzielen.

Auch ist es vorteilhaft, wenn die Magnete an dem beweglichen Element festgelegt sind und wenn der Magnetfeldsensor an einem Gehäuse festgelegt ist.

Obgleich die Anordnung auch andersherum ausgelegt sein kann, ist die Festlegung des Magnetfeldsensors an dem Gehäuse vorteilhaft. Denn die elektrischen Anschlüsse sind in diesem Fall einfach zu realisieren.

Insgesamt ist es besonders vorteilhaft, wenn der Abschnitt in Erfassungsrichtung eine Position aufweist, bei der die Magnetfeldstärke Null oder annähernd Null ist.

Zum einen kann hierbei der axiale Abschnitt, über den die Kennlinie linear ist, vergleichsweise lang ausgebildet werden. Bei herkömmlichen Sensoranordnungen ist die Kennlinie häufig gerade im Bereich von Null stark nichtlinear. Durch die erfindungsgemäße Verwendung von zwei Magneten kann eine solche Linearisierung jedoch bis in den Bereich von etwa Null erreicht werden.

Dies gilt insbesondere dann, wenn die Magnetanordnung vorteilhafterweise wenigstens zwei gleich gepolte Magnete und wenigstens zwei entgegengesetzt gepolte Magnete aufweist.

Hierdurch lässt sich insgesamt ein großer axialer Bereich als Erfassungsbereich der Sensoranordnung realisieren. Durch die Verwendung von zwei gleich gepolten Magneten auf einer Seite und die Verwendung von zwei entgegengesetzt gepolten Magneten auf der anderen Seite ist es zudem möglich, über den gesamten axialen Bereich eindeutige Zuordnungen von Position und Magnetfeldstärke zu realisieren.

Von besonderem Vorteil ist es hierbei, wenn die gleich und die entgegengesetzt gepolten Magnete so angeordnet sind, dass die lineare Kennlinie einen Nulldurchgang aufweist.

Der Nulldurchgang entspricht dabei vorzugsweise einer Mittenposition des Schaltelementes bzw. des Abschnittes in Erfassungsrichtung. Auch in diesem Bereich ist die Kennlinie bei der erfindungsgemäßen Sensoranordnung linear und kann im Gegensatz zum Stand der Technik einen vergleichsweise hohen Gradienten besitzen. Demzufolge ist die Regelbarkeit der Position des beweglichen Elementes im Bereich des Nulldurchganges erleichtert.

Insgesamt ist es vorteilhaft, wenn wenigstens einer der Magnete ein Permanentmagnet ist.

Permanentmagnete haben den Vorteil, dass sie keine eigene Energieversorgung benötigen und wartungsfrei sind. Die Festlegung an einem beweglichen Element ist daher auf einfache Weise möglich.

Alternativ ist es bevorzugt, wenn wenigstens einer der Magnete ein Elektromagnet ist.

Mittels Elektromagneten lassen sich Magnetfeldverteilungen auf besonders günstige Art und Weise kombinieren, bspw. auch durch Veränderung der Stromstärke, die den jeweiligen Magneten aufgeprägt wird.

Gemäß einer weiteren bevorzugten Ausführungsform sind die wenigstens zwei Magnete in einem gemeinsamen Gehäuse integriert bzw. sind als materielle Einheit bereitgestellt.

Hierdurch kann der Bauteilaufwand verringert werden. Es versteht sich, dass in einem Gehäuse nicht nur jeweils zwei oder mehr gleichgepolte Magnete aufgenommen sein können, sondern eine Magnetanordnung insgesamt mit sowohl gleichgepolten als auch entgegengesetzt gepolten Magneten.

Aufgrund der Linearisierung der Kennlinie unter Verwendung von wenigstens zwei Magneten zur Bildung der Kennlinie ist es möglich, die individuellen Magnete zumindest teilweise als vergleichsweise kostengünstige Ferritmagnete oder Ähnliches zu realisieren. Insbesondere ist es ggf. möglich, auf sog. Seltenerdmagnete ganz oder zumindest teilweise zu verzichten. Alternativ ist es möglich, insgesamt deutlich kompaktere Einzelmagnete zu verwenden, anstelle der relativ großbauenden Magnete des Standes der Technik. Es versteht sich, dass die jeweilige Magnetanordnung mehr als zwei Magnete beinhalten kann, bspw. drei, vier oder noch mehr Magnete.

Gemäß einer weiteren bevorzugten Ausführungsform weist die Magnetanordnung wenigstens drei Magnete auf, deren zu dem Magnetfeldsensor weisende Stirnseiten im Schnitt entlang der Erfassungsrichtung gemeinsam eine Kurvenform bilden.

Gemäß einem zweiten Aspekt der vorliegenden Erfindung wird die obige Aufgabe ferner gelöst durch eine Sensoranordnung zum Erfassen von wenigstens einer Position eines beweglich gelagerten Elementes in einer Erfassungsrichtung, wobei die Sensoranordnung eine Magnetanordnung, die in der Erfassungsrichtung eine Magnetfeldverteilung besitzt, und einen Magnetfeldsensor aufweist, wobei die Magnetanordnung und der Magnetfeldsensor so angeordnet sind, dass der Magnetfeldsensor in unterschiedlichen Positionen des beweglichen Elementes in Erfassungsrichtung unterschiedliche Magnetfeldstärken erfasst, und wobei die Magnetanordnung eine dem Magnetfeldsensor zugewandte Stirnseite aufweist, die im Schnitt entlang der Erfassungsrichtung eine Kurvenform aufweist.

Während im Stand der Technik (US 2004/0239313 A1) eine lineare bzw. gerade flächige Stirnseite vorgeschlagen wird, um eine Linearisierung der Kennlinie zu ermöglichen, wird gemäß dem zweiten Aspekt der Erfindung vorgeschlagen, diese Stirnseite mit einer Kurvenform auszubilden.

Es hat sich gezeigt, dass eine solche Kurvenform eine Linearisierung der Kennlinie bei einer Vielzahl von Anwendungen ermöglicht, wohingegen eine gerade Form der Stirnseite nur für bestimmte Anwendungen geeignet ist.

Von besonderem Vorzug ist es, wenn die Kurvenform die Form einer Potenzfunktion aufweist, insbesondere eine Parabelform.

Es hat sich gezeigt, dass eine solche Form zu einer besonders guten Linearisierung führen kann. Allerdings ist es auch denkbar, als Kurvenform die Form einer Exponentialfunktion (e-Funktion), einer Wurzelfunktion oder auch einer logarithmischen Funktion heranzuziehen.

Von besonderem Vorteil ist es ferner, wenn der Abstand zwischen der Sensoranordnung und der Stirnseite größer ist als 0,5 mm.

Während die Ausbildung mit geraden Stirnflächen gemäß dem oben genannten Stand der Technik für besonders kurze Distanzen zwischen der Stirnseite und dem Magnetfeldsensor möglich erscheint, führt die erfindungsgemäß vorgeschlagene Kurvenform insbesondere bei größeren Abständen zu einer guten Linearisierung der Kennlinie.

Von besonderem Vorteil ist es ferner, wenn der Abstand zwischen der Sensoranordnung und der Stirnseite größer ist als 1,0 mm.

Insgesamt ist es ferner vorteilhaft, wenn die Magnetanordnung als ein einstückiger Permanentmagnet ausgebildet ist.

Ein solcher einstückiger Permanentmagnet lässt sich beispielsweise im Sinterverfahren (durch Pressen in Formen) herstellen. Hierdurch sind Formen für die Magnetanordnung relativ frei wählbar. Alternativ ist es auch denkbar, Magnetstaub in Kunststoff einzubinden. Auch hierbei lassen sich beliebige Formen erzielen, beispielsweise durch Spritzgießen.

Generell ist es jedoch auch denkbar, die Kurvenform durch eine Mehrzahl von drei oder mehr Magneten zu erzielen, die in Erfassungsrichtung nebeneinander angeordnet sind.

Insgesamt wird wenigstens einer der folgenden Vorteile erzielt:
- Eine lineare Kennlinie ermöglicht die Verwendung einfacherer Regel- bzw. Steueralgorithmen.
- Bei der Verwendung von gleich und entgegengesetzt gepolten Magneten ist es möglich, im linearen Bereich einen relativ hohen Gradienten zu erzielen.
- Die Verwendung von Seltenerdmagneten ist ggf. nicht erforderlich, obgleich die Verwendung von Seltenerdmagneten erfindungsgemäß nicht ausgeschlossen sein soll.
- Da die Kennlinie im Wesentlichen linear ist, ist keine Einlernstrategie notwendig, um die Abhängigkeit von Position und Magnetfeld zu ermitteln. Diese ergibt sich vielmehr aufgrund der linearen Kennlinie.
- Da die verwendeten Einzelmagnete jeweils schwächer ausgebildet sein können, ist es möglich, Störfelder zu reduzieren, die insbesondere die Umgebungssensorik negativ beeinflussen können.
- Es ist nicht notwendig, ein nichtlineares Kennfeld im Speicher eines Steuergerätes abzulegen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Schaltanordnung gemäß einer Ausführungsform der vorliegenden Erfindung;
- Fig. 2: eine Kennlinie der Sensoranordnung einer erfindungsgemäßen Schaltanordnung in Form eines Diagrammes von Magnetfeldstärke über dem Weg;
- Fig. 3: eine schematische Darstellung einer Sensoranordnung gemäß einer weiteren Ausführungsform der vorliegenden Erfindung;
- Fig. 4: eine schematische Darstellung einer alternativen Anordnung einer Magnetanordnung für eine erfindungsgemäße Sensoranordnung;
- Fig. 5: eine schematische Darstellung einer Schaltanordnung gemäß einer alternativen Ausführungsform der vorliegenden Erfindung; und
- Fig. 6: ein Diagramm mit unterschiedlichen Kurvenfunktionen, die zur Realisierung der Formgebung der Stirnseiten der Magnetanordnung der Schaltanordnung der Fig. 5 geeignet sind.

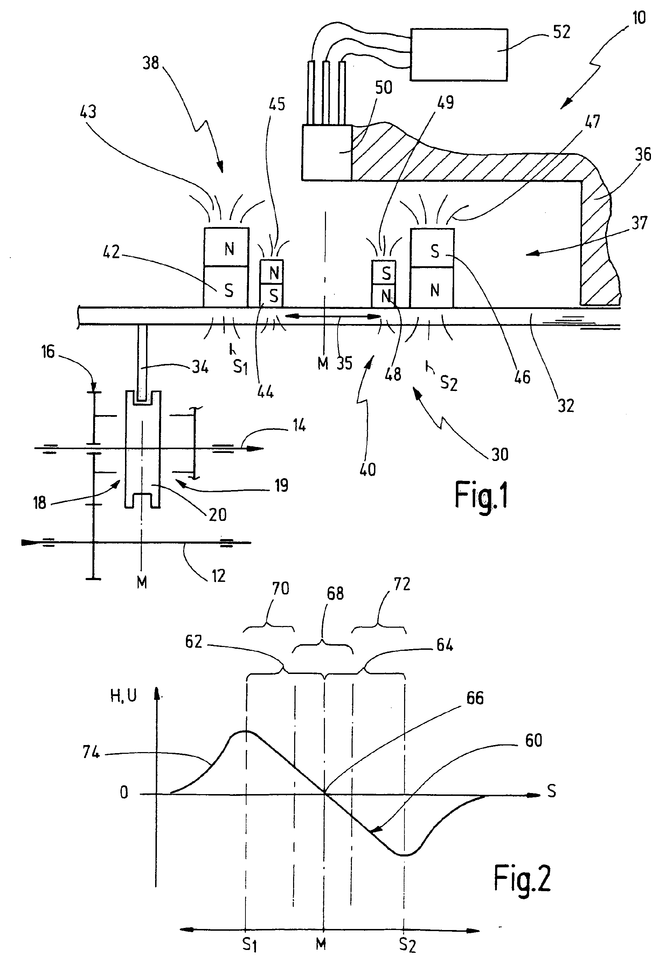

In Fig. 1 ist ein Stufengetriebe für ein Kraftfahrzeuggetriebe in schematischer Form dargestellt und generell mit 10 bezeichnet.

Das Stufengetriebe 10 weist eine nicht näher bezeichnete Eingangswelle, eine Vorgelegewelle 12 und eine Ausgangswelle 14 auf.

Ferner weist das Stufengetriebe 10 eine Mehrzahl von Radsätzen auf, von denen in Fig. 1 aus Gründen einer übersichtlichen Darstellung nur einer bei 16 gezeigt ist.

Ein Radsatz entspricht bei dem Stufengetriebe 10 dabei einer Gangstufe. Zum Einschalten des Radsatzes 16 in den Leistungsfluss ist eine erste Schaltkupplung 18 vorgesehen, bspw. in Form einer herkömmlichen Synchronkupplung. Die Schaltkupplung 18 ist mittels einer Schiebemuffe 20 betätigbar, die axial verschieblich an der Ausgangswelle 14 gelagert ist.

Die Schiebemuffe 20 ist ferner dazu ausgelegt, eine zweite Schaltkupplung 19 für einen weiteren Radsatz zu betätigen.

Zum Verschieben der Schiebemuffe 20 und somit zum Betätigen der Schaltkupplungen 18, 19 ist eine Schaltanordnung gemäß der vorliegenden Erfindung vorgesehen, die in Fig. 1 generell mit 30 bezeichnet ist.

Die Schaltanordnung 30 weist ein Schaltelement 32 in Form einer Schaltstange auf. An der Schaltstange 32 ist ein Schaltglied in Form einer Schaltgabel 34 festgelegt.

Die Schaltstange 32 ist in einer axialen Richtung 35 verschieblich an einem schematisch dargestellten Gehäuse 36 gelagert. Ferner kann die Schaltstange 32 mit einem nicht dargestellten Aktuator verbunden sein, bspw. einem Hydraulikaktuator oder einem elektromechanischen Aktuator.

Das Schaltglied 34 steht in Eingriff mit einer Umfangsnut der Schiebemuffe 20. Ein axiales Verschieben der Schaltstange 32 führt folglich zu einem axialen Verschieben der Schiebemuffe 20.

Das Stufengetriebe 10 ist vorzugsweise ein automatisiertes Getriebe, wie bspw. ein ASG-Getriebe, ein Doppelkupplungsgetriebe oder Ähnliches. Die erfindungsgemäße Schaltanordnung 30 lässt sich jedoch auch auf andere Getriebetypen anwenden, bspw. auf IVT-Getriebe, etc.

Zur Erfassung der axialen Position der Schaltstange 32 ist eine erfindungsgemäße Sensoranordnung 37 vorgesehen.

Die Sensoranordnung 37 weist eine erste Magnetanordnung 38 und eine zweite Magnetanordnung 40 auf. Die zwei Magnetanordnungen 38, 40 sind in axialer Richtung versetzt an der Schaltstange 32 festgelegt, vorzugsweise symmetrisch in Bezug auf eine axiale Mittenposition M.

Die erste Magnetanordnung 38 weist einen ersten Magnet 42, der ein erstes Magnetfeld 43 erzeugt, und einen zweiten Magneten 44 auf, der ein zweites Magnetfeld 45 erzeugt.

In entsprechender Weise weist die zweite Magnetanordnung 40 einen dritten Magneten 46, der ein drittes Magnetfeld 47 erzeugt, und einen vierten Magneten 48 auf, der ein viertes Magnetfeld 49 erzeugt.

In der Mittenposition M ist an dem Gehäuse 36 ein Magnetfeldsensor 50, vorliegend als Hall-Sensor ausgebildet, festgelegt.

Die Magnete 42, 44, 46, 48 sind jeweils als Permanentmagnete ausgebildet. Sie sind so an der Schaltstange 32 festgelegt, dass ihre jeweiligen Nord-/Süd-Achsen radial ausgerichtet sind (mit anderen Worten sind die Magnete radial magnetisiert).

Der erste Magnet 42 und der zweite Magnet 44 der ersten Magnetanordnung 38 sind gleich gepolt, wobei der erste Magnet 42 ein stärkerer Magnet ist, der ein stärkeres Magnetfeld erzeugt.

In entsprechender Weise sind der dritte Magnet 46 und der vierte Magnet 48 der zweiten Magnetanordnung 40 gleich gepolt, jedoch entgegengesetzt zu den Magneten 42, 44 der ersten Magnetanordnung 38.

Der vierte Magnet 48 ist weniger stark als der dritte Magnet 46. Die weniger starken Magnete 44, 48 der Magnetanordnungen 38, 40 sind einander zugewandt.

Die unterschiedliche Stärke der Magnete 42, 44 bzw. 46, 48 lässt sich dadurch realisieren, dass die Magnete unterschiedlich stark magnetisiert sind, dadurch, dass die Magnete unterschiedlich groß sind, und/oder dadurch, dass die Magnete von einem unterschiedlichen Typ sind. Die Darstellung mit unterschiedlicher Baugröße ist in Fig. 4 lediglich beispielhaft gewählt.

Die Sensoranordnung 30 dient z.B. dazu, die Position der Schaltstange 32 in die Mittenposition M einzuregeln. Zum anderen dient die Sensoranordnung 30 dazu, um zu erfassen, wenn sich die Schaltstange 32 in einer ersten Schaltposition S1 befindet, bei der die erste Schaltkupplung 18 geschlossen ist, oder in einer zweiten Schaltposition S2 befindet, bei der die zweite Schaltkupplung 19 geschlossen ist.

Der Magnetfeldsensor 50 ist zu diesem Zweck mit einer Steuereinrichtung 52 verbunden, die die genannten Steueraufgaben erfüllt.

Obgleich in Fig. 1 die erste und die zweite Magnetanordnung 38, 40 jeweils zwei Magnete 42, 44 bzw. 46, 48 aufweisen, versteht sich, dass die Magnetanordnungen auch jeweils mehr als zwei Magnete aufweisen können, die in axialer Richtung versetzt an der Schaltstange 32 angeordnet sind, bspw. drei, vier oder mehr Magnete.

Entscheidend ist, dass innerhalb einer Magnetanordnung 38, 40 wenigstens zwei Magnete 42, 44 bzw. 46, 48 so miteinander kombiniert werden, so dass sich zumindest über einen axialen Abschnitt eine etwa lineare Kennlinie der Sensoranordnung ergibt.

In Fig. 2 ist eine Magnetfeldverteilung 60 in Form eines Diagrammes von magnetischer Feldstärke H über dem Weg s dargestellt, die sich bei der Sensoranordnung 30 der Fig. 1 ergibt.

Die Kennlinie 60 basiert auf den zwei typischen glockenförmigen Magnetfeldverteilungen eines Permanentmagneten, wie sie von einem Magnetfeldsensor wie einem Hall-Sensor gesehen wird. Die Darstellung der Fig. 2 entspricht der von dem Magnetfeldsensor 50 erfassten Feldstärke H über dem Weg s, wobei die Mittenposition M und die zwei Schaltpositionen S1, S2 dargestellt sind.

Bei einer herkömmlichen Kombination zweier Magnete mit unterschiedlicher Polung ergibt sich insbesondere im Bereich der Mittenposition ein veränderlicher Gradient, der in der Mittenposition nahezu gegen Null geht (Steigung annähernd Null). Durch die Kombination der Magnete 42, 46 mit jeweils einem weiteren gleich gepolten Magnet 44 bzw. 48 ist es möglich, den Bereich zwischen den zwei Spitzenwerten S1, S2 durchgängig zu linearisieren. Mit anderen Worten ergibt sich über den gesamten Abschnitt von der Schaltposition S1 bis zur Schaltposition S2 eine lineare Kennlinie des von dem Magnetfeldsensor 50 erfassten Feldes (proportional zu der daraus resultierenden Spannung U) über dem Weg s.

Im Bereich der Mittenposition M besitzt die Magnetfeldverteilung 60 einen Nulldurchgang 66, wobei sich hin zu der ersten Schaltposition S1 ein erster linearer Bereich 62 ins Positive anschließt und wobei sich hin zu der zweiten Schaltposition S2 ein zweiter linearer Bereich 64 ins Negative anschließt. Demzufolge ist über den gesamten Bereich 62, 64 jeder Wegposition s eine eindeutige Feldstärke bzw. Spannung zuzuordnen.

Ein mittlerer Bereich um die Mittenposition M herum ist als Regelungsbereich 68 gezeigt, innerhalb dessen die Position der Schaltstange 32 auf die Mittenposition M eingeregelt werden kann. Links und rechts davon sind Steuerungsbereiche 70, 72 gezeigt, innerhalb derer die Schaltkupplungen 18, 19 gesteuert geschlossen bzw. geöffnet werden können.

Gerade im Regelungsbereich 68 weist die Kurve 60 einen relativ großen Gradienten auf, so dass die Regelbarkeit verbessert ist. Genauer gesagt, ergibt sich eine bessere Auflösung des Sensorsignals.

Links und rechts des gesamten Erfassungsbereiches, bestehend aus dem Regelungsbereich 68 und den Steuerungsbereichen 70, 72, ist die Magnetfeldverteilung bzw. - kurve jeweils glockenförmig, wie es durch einen einzelnen Magneten hervorgerufen wird. In diesem Bereich ist der Einfluss der zusätzlichen Magnete 44, 48 jeweils relativ gering. Man erkennt, dass diese glockenförmigen Bereiche 74 sich nichtlinear asymtotisch an Null annähern, so dass der Gradient im Bereich einer Feldstärke von Null auch nahezu gegen Null geht.

Bei der oben beschriebenen Ausführungsform ist ein Nulldurchgang in der Mittenposition M eingerichtet. Es ist jedoch auch möglich, die Magnetanordnungen 42, 44 bzw. 46, 48 so anzuordnen, dass ein Nulldurchgang außerhalb der Mittenposition M liegt.

Obgleich die Erfindung anhand eines Ausführungsbeispieles beschrieben worden ist, versteht sich, dass die Erfindung nicht auf dieses Ausführungsbeispiel beschränkt ist.

So ist anstelle des beschriebenen Getriebes eine Anwendung auf unterschiedliche Getriebearten möglich, bspw. automatisierte Schaltgetriebe, Doppelkupplungsgetriebe, etc. Ferner ist auch eine Anwendung auf andere Getriebearten möglich, bspw. IVTs oder auch axial bewegliche Teile in Wandlerautomaten, etc.

Auch ist es möglich, die erfindungsgemäße Sensoranordnung nicht nur in Getrieben, sondern auch in anderen Anwendungsgebieten zu verwenden, bei denen eine Position in einer Erfassungsrichtung zu erfassen ist.

Die Erfassungsrichtung ist, wie bei dem obigen Ausführungsbeispiel, vorzugsweise eine axiale Richtung. Es ist jedoch auch möglich, die gesamte Anordnung für radiale Erfassungsrichtungen oder für Erfassungsvorgänge in Umgangsrichtung zu verwenden. Im letzteren Fall könnte bspw. eine Magnetanordnung aus wenigstens zwei Sensoren bestehen, die in Umfangsrichtung eines drehbar gelagerten Elementes benachbart zueinander angeordnet sind, so dass sich in Umfangsrichtung eine annähernd lineare Kennlinie eines Magnetfeldsensors ergibt.

Ferner ist eine Anwendung in Getrieben nicht nur im Bereich von Schaltelementen möglich. Vielmehr ist es auch möglich, die erfindungsgemäße Sensoranordnung in Parksperren (zur Erfassung von Parksperrenlagen), in Kupplungen (zur Erfassung von Kupplungspositionen) etc. zu verwenden.

Die Magnete 42, 44, 46, 48 können jeweils als Ferritmagnete ausgebildet sein, obgleich es auch denkbar ist, die Magnete zumindest teilweise als Seltenerdmagnete auszubilden.

Generell ist natürlich auch möglich, die Magnete als Elektromagnete auszubilden.

Anstelle eines Hall-Sensors 50 kann auch ein anderer Magnetfeldsensor verwendet werden.

Generell ist es auch möglich, den Magnetfeldsensor an dem beweglichen Element festzulegen und die Magnete an einem Gehäuse festzulegen.

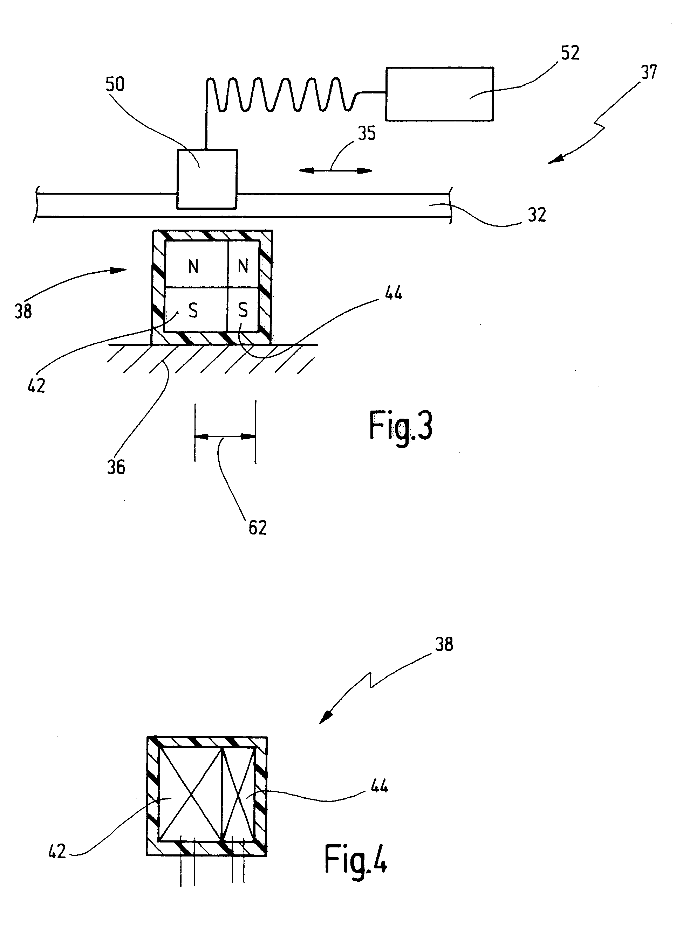

Ein derartiges Ausführungsbeispiel einer erfindungsgemäßen Sensoranordnung ist in Fig. 3 gezeigt. Die in Fig. 3 gezeigte Anordnung entspricht hinsichtlich Aufbau und Funktionsweise generell der Sensoranordnung 37 der Figuren 1 und 2. Gleiche Elemente sind daher mit gleichen Bezugsziffern versehen. Im Folgenden wird lediglich auf Unterschiede eingegangen.

Bei der Sensoranordnung 37 der Fig. 3 ist der Hall-Sensor an einem Element 32 festgelegt, das in einer axialen Richtung 35 beweglich gelagert ist. Der Hall-Sensor 50 ist bspw. über eine flexible Leitungsanordnung mit einer Steuereinrichtung 52 verbunden.

Eine Magnetanordnung 38 ist an einem Gehäuse 36 festgelegt. Die Magnetanordnung 38 weist einen ersten Magnet 42 und einen zweiten Magnet 44 auf, deren Kennlinien sich zu einer linearen Kennlinie aus der Sicht des Magnetfeldsensors 50 ergänzen. Die zwei Magnete 42, 44 sind dabei in einem gemeinsamen Gehäuse (nicht näher bezeichnet) integriert, so dass sie als ein Bauteil verwendbar und montierbar sind.

Der lineare Erfassungsabschnitt 62 ist bei der Sensoranordnung 37 der Fig. 3 ohne Nulldurchgang ausgebildet, kann sich jedoch bis auf annähernd Null oder bis auf Null erstrecken. Es versteht sich, dass bei der Sensoranordnung 37 der Fig. 3 eine weitere Einheit aus wenigstens zwei Magneten vorgesehen sein kann, um eine lineare Kennlinie mit Nulldurchgang zu erzielen, ähnlich wie bei der Ausführungsform der Fig. 1.

Das Gehäuse, in dem die zwei Magnete 42, 44 eingebettet sind, kann aus einem Kunststoff hergestellt sein. Es versteht sich, dass auch bei der Ausführungsform der Fig. 1 ein solches Gehäuse vorgesehen sein kann.

In Fig. 4 ist eine alternative Ausführungsform einer Magnetanordnung mit einem ersten Magnet 42 und einem zweiten Magnet 44 gezeigt. Im Gegensatz zu den Magneten 42, 44 der Sensoranordnungen 37 der Figuren 1 bis 3 (die als Permanentmagnete ausgebildet sind), sind die Magnete 42, 44 der Magnetanordnung 38 der Fig. 4 als Elektromagnete ausgebildet.

Die Elektromagnete können vorzugsweise separat voneinander angesteuert werden. Hierdurch ist eine Linearisierung der Kennlinie bspw. auch durch Beeinflussung der Stromstärke möglich, die den zwei Magneten 42, 44 jeweils aufgeprägt wird.

Alternativ ist es auch möglich, die zwei Elektromagnete durch zwei seriell hintereinander liegende Wicklungen zu realisieren, die bspw. eine unterschiedliche Windungszahl und/oder Erstreckung aufweisen. Im letzteren Fall ist nur ein einziger Strom durch beide Magnete 42, 44 geführt.

In Fig. 4 ist in schematischer Form eine Schaltanordnung 30 gemäß einer alternativen Ausführungsform der vorliegenden Erfindung dargestellt. Die Schaltanordnung 30 der Fig. 5 entspricht hinsichtlich Aufbau und Funktionsweise generell der Schaltanordnung 30 der Fig. 1. Im Folgenden wird daher lediglich auf Unterschiede eingegangen.

Die Schaltanordnung 30 der Fig. 5 weist eine erste Magnetanordnung 38 und eine zweite Magnetanordnung 40 auf, die in axialer Richtung versetzt an einer in Erfassungsrichtung beweglichen Schaltstange 32 festgelegt sind, und zwar symmetrisch in Bezug auf eine axiale Mittenposition M.

Die Magnetanordnungen 38, 40 sind jeweils als Permanentmagnete ausgebildet. Genauer gesagt sind die Permanentmagnete 38, 40 jeweils einstückig ausgebildet, und zwar durch ein Sinterverfahren, durch ein Kunststoffspritzgießverfahren mit eingebundenen magnetischen Partikeln, oder ähnliche Verfahren.

Demzufolge ist die erste Magnetanordnung 38 durch einen Permanentmagneten 80 gebildet, die zweite Magnetanordnung 40 durch einen zweiten Magneten 82. Die Permanentmagnete 80, 82 sind in radialer Richtung magnetisiert, so dass eine den Nordpol N und den Südpol S verbindende Achse generell quer zu der Erfassungsrichtung 35 ausgerichtet ist.

Die Magnete 80, 82 weisen aufeinanderzuweisende Seitenflächen auf, die in Fig. 5 nicht näher bezeichnet sind. Zum anderen weisen die Magnete 80, 82 in Erfassungsrichtung 35 voneinanderwegweisende Seitenflächen 84 auf. Die Stirnseiten 86 der Magnete 80, 82 sind jeweils mit einer Kurvenform ausgebildet, und zwar im vorliegenden Fall gemäß einer Parabel (wie einer x²-Funktion). Die Kurvenform basiert vorzugsweise auf einer mathematischen Funktion, und zwar aus einem geeignet gewählten Ausschnitt einer solchen mathematischen Funktion (insbesondere Potenzfunktion).

Die Kurvenform der Stirnseiten 86 ist dabei so gewählt, dass der in radialer Richtung höchste Punkt der Kurve, d.h. der zu dem Magnetfeldsensor am nächsten befindliche Punkt der Kurvenform sich im Bereich der jeweiligen Seitenflächen 84 befindet. Die Kurvenformen der Stirnseiten 86 sind ferner so gewählt, dass die Kurven in Richtung auf den jeweiligen anderen Magnet sich von dem Magnetfeldsensor 50 immer weiter entfernen, und zwar bis hin zu den Seitenflächen, die aufeinander zu weisen.

Der kürzeste Abstand zwischen den Stirnseiten 86 und dem Magnetfeldsensor 50 ist in Fig. 5 mit 88 bezeichnet. Der Abstand 88 beträgt bei einer bevorzugten Ausführungsform wenigstens 0,5 mm, insbesondere 1,0 mm und mehr, wie beispielsweise 3 mm ± 1 mm.

Es hat sich gezeigt, dass die Kurvenform der Stirnseiten 86 zur Linearisierung der Kennlinie der Sensoranordnung 30 beiträgt bzw. diese ermöglicht, und zwar insbesondere bei größeren Abständen 88 (in den genannten Bereichen). Ferner hat sich gezeigt, dass eine derartige Kurvenform die Sensoranordnung generell unempfindlicher macht gegenüber Toleranzen des Abstandes 88. Insbesondere bei der Verwendung in Stufengetrieben ist dies von besonderer Bedeutung, da mit größeren Toleranzen der Einbaulage der Schaltstange 32 in Bezug auf das Gehäuse 36 gerechnet werden muss, beispielsweise im Bereich von wenigstens 20 % des Sollabstandes 88.

In Fig. 5 ist ferner gezeigt, dass die Stirnseiten 86 der Magnete 80, 82 an den entgegengesetzten Enden zumindest abschnittsweise gerade ausgebildet sein können, wie es in Fig. 5 gestrichelt dargestellt ist. Der entsprechende gerade Stirnseitenabschnitt ist in Fig. 5 mit 90 bezeichnet. Die insoweit gegenüber der Kurvenform in Erfassungsrichtung 35 versetzte Seitenfläche ist in Fig. 5 mit 84' bezeichnet.

Fig. 6 ist ein Diagramm mit mehreren mathematischen Potenzfunktionen, die zur Bildung der Kurvenform der Stirnseiten 86 geeignet sind. So ist beispielsweise bei 102 eine Parabelfunktion gezeigt, wie eine x²-Funktion. Bei 104 ist eine e-Funktion gezeigt, und bei 106 ist eine Wurzelfunktion gezeigt. Es versteht sich, dass jeweils ein geeigneter Abschnitt in x-Richtung zur Bildung der Kurvenform herangezogen werden kann. Ferner versteht sich, dass auch andere mathematische Funktionen zur Bildung der Kurvenform verwendet werden können, wie beispielsweise logarithmische Funktionen, trigonometrische Funktionen etc.

## Patentansprüche

1. Sensoranordnung (37) zum Erfassen von wenigstens einer Position (S1, M, S2) eines beweglich gelagerten Elementes (32) in einer Erfassungsrichtung (35), wobei die Sensoranordnung (37) eine Magnetanordnung (38; 40), die in der Erfassungsrichtung (35) eine Magnetfeldverteilung besitzt, und einen Magnetfeldsensor (50) aufweist, und wobei die Magnetanordnung (38; 40) und der Magnetfeldsensor (50) so angeordnet sind, dass der Magnetfeldsensor (50) in unterschiedlichen Positionen (S1, M, S2) des beweglichen Elementes (32) in Erfassungsrichtung (35) unterschiedliche Magnetfeldstärken (H) erfasst,
**dadurch gekennzeichnet, dass**
die Magnetanordnung (38; 40) wenigstens zwei Magnete (42, 44; 46, 48) aufweist, deren Magnetfeldverteilungen so miteinander kombiniert sind, dass sich zumindest über einen Abschnitt (62; 64) in Erfassungsrichtung (35) eine annähernd lineare Kennlinie (60) der Sensoranordnung (37) ergibt.

2. Sensoranordnung nach Anspruch 1, **dadurch gekennzeichnet, dass** die wenigstens zwei Magnete (42, 44; 46, 48) unterschiedlich starke Magnetfelder erzeugen.

3. Sensoranordnung nach Anspruch 1 oder 2, **dadurch gekennzeichnet, dass** die wenigstens zwei Magnete (42, 44; 46, 48) in radialer Richtung magnetisiert sind.

4. Sensoranordnung nach einem der Ansprüche 1 - 3, **dadurch gekennzeichnet, dass** die wenigstens zwei Magnete (42, 44; 46, 48) parallel zueinander angeordnet und gleich gepolt sind.

5. Sensoranordnung nach einem der Ansprüche 1 - 4, **dadurch gekennzeichnet, dass** die Magnete (42, 44; 46, 48) an dem beweglichen Element (32) festgelegt sind und dass der Magnetfeldsensor (50) an einem Gehäuse (36) festgelegt ist.

6. Sensoranordnung nach einem der Ansprüche 1-5, **dadurch gekennzeichnet, dass** der Abschnitt (62; 64) in Erfassungsrichtung eine Position (M) aufweist, bei der die Magnetfeldstärke (4) Null oder annähernd Null ist.

7. Sensoranordnung nach einem der Ansprüche 1 - 6, **dadurch gekennzeichnet, dass** die Magnetanordnung (38; 40) wenigstens zwei gleich gepolte Magnete (42, 44) und wenigstens zwei entgegengesetzt gepolte Magnete (46, 48) aufweist.

8. Sensoranordnung nach Anspruch 7, **dadurch gekennzeichnet, dass** die gleich und die entgegengesetzt gepolten Magnete (42, 44; 46, 48) so angeordnet sind, dass die lineare Kennlinie (60) einen Nulldurchgang aufweist.

9. Sensoranordnung nach Anspruch 8, **dadurch gekennzeichnet, dass** der Nulldurchgang in der Mitte des Abschnittes (62; 64) in Erfassungsrichtung (35) liegt.

10. Sensoranordnung nach einem der Ansprüche 1 - 9, **dadurch gekennzeichnet, dass** wenigstens einer der Magnete (42, 44; 46, 48) ein Permanentmagnet ist.

11. Sensoranordnung nach einem der Ansprüche 1-10, **dadurch gekennzeichnet, dass** wenigstens einer der Magnete (42, 44; 46, 48) ein Elektromagnet ist.

12. Sensoranordnung nach einem der Ansprüche 1-11, **dadurch gekennzeichnet, dass** die wenigstens zwei Magnete (42, 44; 46, 48) in ein gemeinsames Gehäuse integriert sind.

13. Sensoranordnung neA 1 - 12, dgd die Magnetanordnung wenigstens drei Magnete aufweist, deren zu dem Magnetfeldsensor weisenden Stirnseiten im Schnitt entlang der Erfassungsrichtung (35) gemeinsam eine Kurvenform bilden.

14. Sensoranordnung (37) zum Erfassen von wenigstens einer Position (S1, M, S2) eines beweglich gelagerten Elementes (32) in einer Erfassungsrichtung (35), wobei die Sensoranordnung (37) eine Magnetanordnung (38; 40), die in der Erfassungsrichtung (35) eine Magnetfeldverteilung besitzt, und einen Magnetfeldsensor (50) aufweist, wobei die Magnetanordnung (38; 40) und der Magnetfeldsensor (50) so angeordnet sind, dass der Magnetfeldsensor (50) in unterschiedlichen Positionen (S1, M, S2) des beweglichen Elementes (32) in Erfassungsrichtung (35) unterschiedliche Magnetfeldstärken (H) erfasst, und wobei die Magnetanordnung (38; 40) eine dem Magnetfeldsensor zugewandte Stirnseite (86) aufweist,
dgd
die Stirnseite (86) im Schnitt entlang der Erfassungsrichtung (35) eine Kurvenform aufweist.

15. Sensoranordnung nA 13 oder 14, dgd die Kurvenform eine Form einer Potenzfunktion aufweist, insbesondere eine Parabelform.

16. Sensoranordnung neA 13 - 15, dgd der Abstand zwischen der Sensoranordnung und der Stirnseite (86) größer ist als 0,5 mm.

17. Sensoranordnung nA 16, dgd der Abstand zwischen der Sensoranordnung und der Stirnseite (86) größer ist als 1,0 mm.

18. Sensoranordnung neA 14-17 oder nach dem Oberbegriff des Anspruchs 1, dgd die Magnetanordnung (38;40) als ein einstückiger Permanentmagnet ausgebildet ist.

19. Sensoranordnung nach einem der Ansprüche 1 - 18, **dadurch gekennzeichnet, dass** das bewegliche Element (32) in axialer Richtung (35) verschieblich gelagert ist und dass die Erfassungsrichtung (35) die axiale Richtung (35) ist.

20. Schaltanordnung (30) zum Schalten von Gangstufen eines Stufengetriebes (10), insbesondere für Kraftfahrzeuge, mit wenigstens einem Schaltelement (32), das an einem Gehäuse (36) in einer axialen Richtung (35) verschieblich gelagert ist und beim Schalten in der axialen Richtung (35) versetzt wird, und mit einer Sensoranordnung (37) nach einem der Ansprüche 1 - 19.
